# DEMANDE DE BREVET EUROPEEN

(11) **EP 3 885 122 A1**
(43) Date de publication de la demande: **29.09.2021**
(21) Numéro de dépôt: 21164931.4
(22) Date de dépôt: 25.03.2021
(51) Int. Cl.: B32B 3/04, B32B 3/30, B29B 11/06, B29B 11/16, B29C 33/76, B29C 53/04, B29C 33/00

(54) **PROCÉDÉ DE RÉALISATION D'UNE NAPPE DE MAINTIEN D'UN COUVERCLE D'UN DISPOSITIF DE COUSSIN GONFLABLE**

(30) Priorité: 27.03.2020 FR 2003034
(71) Demandeur: Faurecia Intérieur Industrie, 92000 Nanterre (FR)
(72) Inventeur: OLMEDO HERNANDEZ, Miguel, 08013 BARCELONA (ES)
(74) Mandataire: Lavoix

(57) **Abrégé**

Le procédé de réalisation comprend les étapes suivantes :
- fourniture d'une partie d'une bande (14) de matériau d'une nappe de maintien plane et tendue à un dispositif de mise en forme (20), ladite partie de bande s'étendant dans un plan principal (P),
- découpe de la partie de bande (14) s'étendant dans le dispositif de mise en forme (20) à la dimension de la nappe de maintien (1) à réaliser au moyen d'un dispositif de découpe (18) pour obtenir une nappe de maintien sensiblement plane et tendue dans le dispositif de mise en forme (20),
- déformation au moyen du dispositif de mise en forme (20) d'une partie centrale de ladite nappe de sorte à former une zone charnière (6) comprenant au moins deux panneaux (8) s'étendant dans des plans différents du plan principal (P).

## Description

La présente invention concerne un procédé de réalisation d'une nappe de maintien d'un couvercle d'un dispositif de coussin gonflable.

L'invention concerne également un procédé de réalisation d'un dispositif de coussin gonflable comprenant une nappe de maintien obtenue par un tel procédé.

Dans un dispositif de coussin gonflable de sécurité, ou airbag, le coussin gonflable est disposé de façon connue, dans un boîtier, le boitier étant fixé à un canal de tir agencé pour guider le coussin gonflable lors de son déploiement. Le canal de tir est fermé par un couvercle, qui peut être formé par une partie de l'élément de garnissage sous lequel est disposé le dispositif de coussin gonflable. Cette partie est agencée pour se rompre et ainsi libérer un passage pour le déploiement du coussin gonflable. Afin d'éviter que le couvercle ne soit projeté dans l'habitacle ou qu'il se brise en plusieurs morceaux sous l'effet de la force générée par le déploiement du coussin gonflable et afin de mieux contrôler l'ouverture du couvercle, il est connu de relier le couvercle à un corps formant le canal de tir ou un élément voisin du canal de tir au moyen d'une nappe de maintien agencée pour autoriser un mouvement du couvercle par rapport au corps et pour maintenir l'intégrité du couvercle lors du déploiement du coussin gonflable.

Une telle nappe de maintien se présente par exemple sous la forme d'un filet, par exemple en aramide dont un premier volet est par exemple surmoulé par le couvercle et dont un deuxième volet est par exemple surmoulé par le corps.

La nappe présente en outre une forme spécifique adaptée à sa fonction et à la forme du dispositif de coussin gonflable, notamment à la forme du corps et à celle du couvercle. Pour réaliser sa fonction, la nappe présente en particulier une zone charnière allongée formée par une partie centrale de la nappe repliée sur elle-même et s'étendant entre le premier et le deuxième volets. La partie repliée autorise un certain débattement du couvercle par rapport au corps afin de réduire les contraintes appliquées sur le corps et sur le couvercle lors du gonflement du coussin gonflable et de dégager un passage suffisant pour le passage du coussin gonflable.

Ainsi la réalisation de la nappe nécessite plusieurs étapes aux cours desquelles la nappe est dimensionnée et la zone charnière est formée, ce qui requière un temps conséquent et différents postes de travail par lesquelles passent la nappe.

L'un des buts de l'invention est de pallier ces inconvénients en proposant un procédé de réalisation d'une nappe de maintien qui peut être mis en œuvre rapidement et simplement.

A cet effet, l'invention concerne un procédé de réalisation, comprenant les étapes suivantes :
- fourniture d'une partie d'une bande de matériau de la nappe de maintien sensiblement plane et tendue à un dispositif de mise en forme de l'outil de réalisation, ladite partie de bande s'étendant dans un plan principal,
- découpe de la partie de bande s'étendant dans le dispositif de mise en forme à la dimension de la nappe de maintien à réaliser au moyen d'un dispositif de découpe de l'outil de réalisation pour obtenir une nappe de maintien sensiblement plane et tendue dans le dispositif de mise en forme,
- déformation au moyen du dispositif de mise en forme d'une partie centrale de ladite nappe de sorte à former une zone charnière comprenant au moins deux panneaux s'étendant dans des plans différents du plan principal, la nappe formant un premier volet d'un côté de la zone charnière et un deuxième volet de l'autre côté de la zone charnière, au moins ledit premier volet et s'étendant dans le plan principal.

Ainsi, le procédé selon l'invention est entièrement réalisé dans un seul outil de réalisation qui est adapté pour dimensionner la nappe et lui conférer la forme voulue. Le procédé peut ainsi être réalisé rapidement et sans nécessiter de transporter la nappe entre différents postes de travail.

Selon d'autres caractéristiques optionnelles du procédé de réalisation selon l'invention, prises isolément ou selon toute combinaison techniquement envisageable :
- la nappe de maintien est formée par un filet en aramide, en polyéthersulfone ou en polyester.
- le procédé comprend une étape de déformation du deuxième volet dans laquelle le deuxième volet est plié pour s'étendre dans un plan secondaire formant un angle non nul avec le plan principal ;
- l'angle formé entre le plan secondaire et le plan principal est sensiblement compris entre 10° et 60° ;
- l'étape de déformation du deuxième volet est réalisée par pliage et introduction dudit deuxième volet dans une fente inclinée selon le plan secondaire par rapport au plan principal ;
- les panneaux de la zone charnière forment chacun un angle compris entre 30° et 150° avec le plan principal ;
- la partie de bande est fournie à partir d'un rouleau de bande de matériau de la nappe de maintien, le procédé comprenant une étape de déroulement de la bande à partir du rouleau et d'acheminement de la bande au dispositif de mise en forme, la partie de la bande étant maintenue plane et tendue par un dispositif de maintien s'étendant en amont du dispositif de mise en forme par rapport à la direction de circulation de la bande au cours de son acheminement au dispositif de mise en forme ;
- le procédé comprend une étape de prélèvement de la nappe de maintien formée du dispositif de mise en forme et de placement de ladite nappe de maintien dans un outil de moulage, ledit prélèvement et ledit placement étant effectué par un dispositif de manipulation robotisé ;
- l'étape de déformation de la partie centrale est réalisée par pliage et introduction de la partie centrale dans une empreinte comprenant une fente s'étendant selon une direction formant un angle non nul avec le plan principal ;
- au moins la partie centrale de la nappe est chauffée au cours l'étape de déformation de la partie centrale.

Selon un autre aspect, l'invention concerne également un procédé de réalisation d'un dispositif de coussin gonflable, comprenant un corps, un couvercle et une nappe de maintien solidarisant le couvercle au corps, le procédé comprenant les étapes suivantes :
- réalisation d'une nappe de maintien telle que décrite ci-dessus,
- positionnement de la nappe de maintien dans une cavité de moulage, présentant la forme du corps et/ou du couvercle,
- injection d'un matériau de moulage dans la cavité de moulage de sorte à surmouler le corps sur l'un des volets de la nappe de maintien et/ou à surmouler le couvercle sur l'autre volet de la nappe de maintien, la zone charnière s'étendant entre le corps et le couvercle.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en perspective d'une nappe de maintien obtenue par un procédé de réalisation selon l'invention,
[Fig 2] - la Fig. 2 est une représentation schématique en coupe d'un outil de réalisation d'une nappe de maintien au cours du procédé de réalisation de la nappe de maintien selon l'invention,
[Fig 3] - la Fig. 3 est une représentation agrandie de la zone III de la Fig. 2, et
[Fig 4] - la Fig. 4 est une représentation schématique en coupe d'un outil de moulage d'un dispositif de coussin gonflable au cours du procédé de réalisation du dispositif de coussin gonflable selon l'invention.

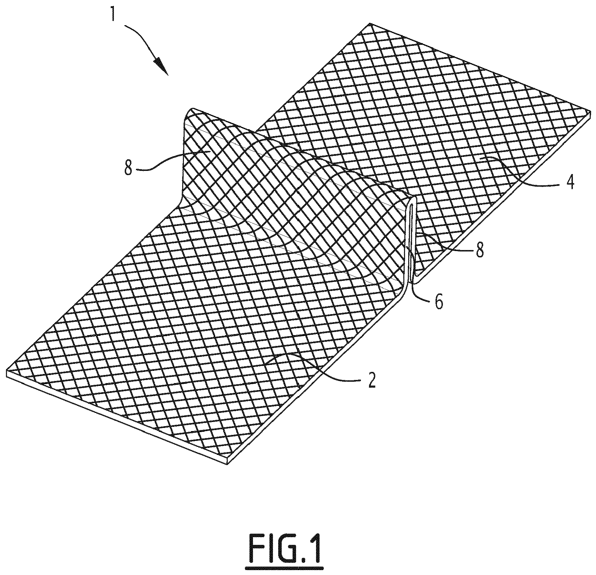

En référence à la Fig. 1, on décrit une nappe de maintien 1 d'un dispositif de coussin gonflable. Une telle nappe de maintien 1 comprend un premier volet 2, un deuxième volet 4 et une zone charnière 6 s'étendant entre le premier et le deuxième volets 2, 4.

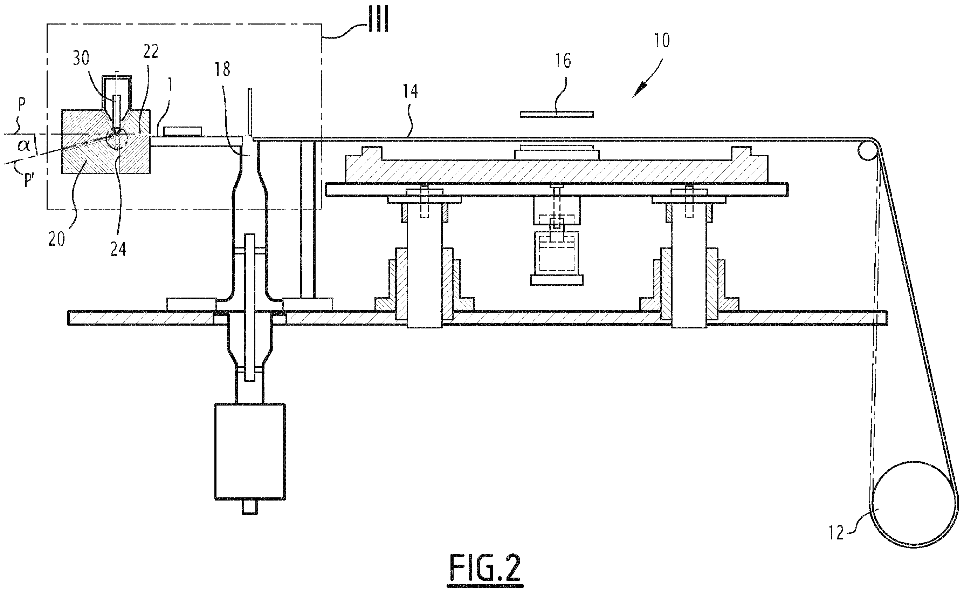

Le premier volet 2 et le deuxième volet 4 sont chacun formés d'une partie de la nappe sensiblement plane. Le premier volet 2 s'étend dans un plan principal P et le deuxième volet 4 s'étend dans un plan secondaire P' formant par exemple un angle α non nul avec le plan principal P, comme visible sur les Fig. 2 à 4. L'angle α est par exemple compris entre 0° et 60°, de préférence entre 10° et 60°. Lorsque l'angle α est égal à 0°, le plan secondaire P' est confondu avec le plan principal P. Le fait de prévoir un angle α non nul permet d'adapter la forme de la nappe de maintien à la forme de la cavité de moulage permettant de réaliser et/ou le couvercle du dispositif de coussin gonflable dans lequel la nappe de maintien 1 doit être intégrée. Le positionnement de la nappe dans l'outil de moulage du dispositif de coussin gonflable est ainsi facilité et le surmoulage assure une fixation fiable de la nappe de maintien au corps et/ou au couvercle, comme cela sera décrit ultérieurement.

La zone charnière 6 est formée par un pli de la nappe de maintien sur elle-même et comprend ainsi deux panneaux 8, l'un des panneaux 8 s'étendant à partir du premier volet 2 et l'autre s'étendant à partir du deuxième volet 4, les panneaux étant reliés entre eux à leur extrémité opposée à l'extrémité reliée au premier ou deuxième volet 2, 4. Les panneaux 8 forment un angle non nul avec les premier et deuxième volets 2 et 4, c'est-à-dire que les panneaux 8 s'étendent dans des plans différents du plan principal P et du plan secondaire P'. Les panneaux 8 forment chacun un angle compris entre 30° et 150° avec le plan principal P. Selon un mode de réalisation particulier, les panneaux 8 sont sensiblement perpendiculaires au plan principal P de sorte que la nappe de maintien 1 présente sensiblement une forme de T vue de côté, la zone charnière formant le pied du T et les premier et deuxième volets 2, 4 formant les ailes du T, comme représenté sur la Fig. 1.

La nappe de maintien 1 est réalisée d'une seule pièce et se présente sous la forme d'un filet, par exemple réalisé en aramide, tel que du Kevlar®, en polyéthersulfone (PES) ou en polyester. Le filet de la nappe de maintien 1 peut comprendre un revêtement, par exemple en polyuréthane ou en polychlorure de vinyle (PVC). Le matériau de la nappe est par exemple tissé. La nappe 1 présente par exemple une épaisseur comprise entre 0,5 mm et 1,5 mm. La nappe de maintien 1 présente une forme tridimensionnelle stable, c'est-à-dire que la nappe de maintien 1 conserve sa forme tridimensionnelle en l'absence d'une sollicitation extérieure, telle qu'une force de traction appliquée sur la nappe de maintien 1. En d'autres termes, la nappe de maintien 1 conserve sa forme de T en l'absence d'une sollicitation extérieure. La nappe de maintien 1 est cependant déformable sous l'effet d'une force extérieure supérieure à une force prédéterminée, notamment pour déplier la nappe de maintien 1, en écartant les panneaux 8 de la zone charnière 6 l'un de l'autre et en autorisant une rotation de ces panneaux 8 par rapport aux premier et deuxième volets 2, 4, comme cela sera décrit ultérieurement.

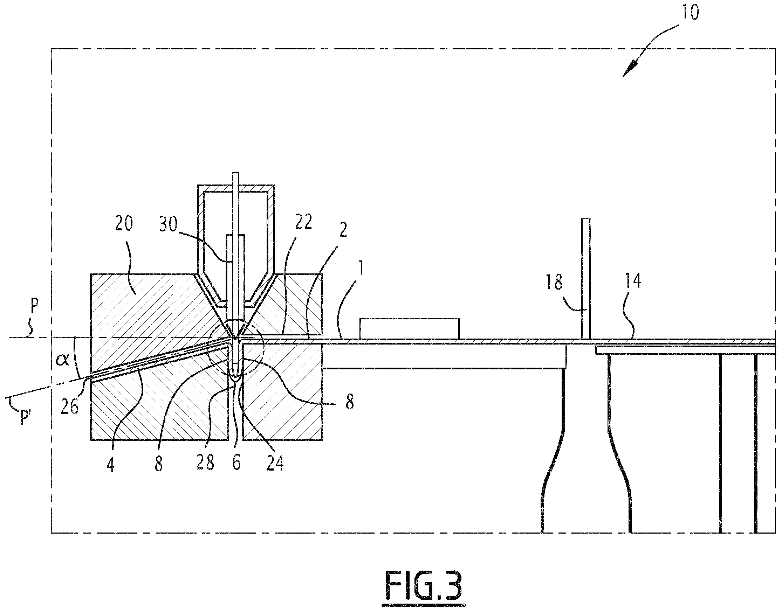

En référence aux Figs. 2 et 3, on décrit à présent le procédé de réalisation de la nappe de maintien 1 décrite ci-dessus. Le procédé est mis en œuvre dans un outil de réalisation 10 de la nappe de maintien 1, partiellement représenté sur ces figures, à partir d'un rouleau 12 d'une bande 14 réalisée dans le matériau dans lequel la nappe de maintien 1 est réalisée.

L'outil de réalisation 10 comprend un dispositif de déroulement (non représenté) de la bande 14 permettant de dérouler la bande 14 et de la faire passer dans les différents dispositifs de l'outil de réalisation 10. Dans la suite de la description, les termes amont et aval sont définis par rapport à la direction de défilement de la bande 14 dans l'outil de réalisation 10.

D'amont en aval, l'outil de réalisation 10 comprend notamment un dispositif de maintien 16 de la bande 14, un dispositif de découpe 18 et un dispositif de mise en forme 20.

Le dispositif de maintien 16 est agencé pour maintenir au moins la partie de la bande 14 s'étendant dans et en aval du dispositif de maintien 16 plane et dans le plan principal P. Ainsi, au moins en aval du dispositif de maintien 16, la bande 14 défile en s'étendant dans le plan principal P. Le dispositif de maintien 16 comprend des éléments de maintien de la partie de la bande 14 dans le plan principal P, par exemple des rouleaux ou des plaques, comprenant des surfaces de maintien appliquées de part et d'autre de la bande 14, les surfaces de maintien s'étendant parallèlement au plan principal P. En passant entre les surfaces de maintien et en étant maintenue tendue par le dispositif de déroulement, la bande 14 circule dans le plan principal P.

Une partie de la bande 14 dont la longueur correspond à la longueur souhaitée de la nappe de maintien 1 est amenée en aval du dispositif de découpe 18 dans le dispositif de mise en forme 20. La longueur de la nappe de maintien 1 correspond à l'addition des longueurs des premier et deuxième volets 2, 4 et des deux panneaux 8 de la zone charnière 6. La longueur de la nappe de maintien 1 est par exemple comprise entre 150 mm et 210 mm. L'outil de réalisation 10 comprend par exemple un ou plusieurs capteurs permettant de détecter lorsque la longueur de la partie de la bande 14 s'étendant en aval du dispositif de découpe a atteint la valeur de longueur souhaitée. La largeur de la bande est par exemple comprise entre 150 mm et 210 mm.

Une fois que la partie de la bande 14 s'étend dans le dispositif de mise en forme 20 en aval du dispositif de découpe, la bande 14 est découpée par le dispositif de découpe 18 afin de permettre la séparation de la nappe 1 du reste de la bande 14. La découpe se fait par exemple par laser ou par vibrations ultrasonores, le dispositif de découpe 18 étant adapté pour émettre un rayonnement laser ou des vibrations ultrasonores vers la bande 14. La découpe par vibrations ultrasonores ne nécessite qu'un faible effort de coupe, permet de réduire la charge thermique et d'obtenir une bonne finition. En outre, comparé à une découpe par la chaleur, la découpe par vibrations ultrasonores émet moins de gaz polluants.

La découpe se fait en amont de la nappe de maintien 1 et forme l'extrémité libre du premier volet 2.

Selon un autre mode de réalisation, la découpe se fait après les étapes de mise en forme de la nappe de maintien 1 qui vont à présent être décrites.

Le dispositif de mise en forme 20 est agencé pour conférer à la nappe de maintien 1 sa forme tridimensionnelle décrite précédemment.

A cet effet et comme plus particulièrement visible sur la Fig. 3, le dispositif de mise en forme 20 comprend successivement selon la direction amont-aval un premier tronçon 22 de mise en forme du premier volet 2, un deuxième tronçon 24 de mise en forme de la zone charnière 6 et un troisième tronçon 26 de mise en forme du deuxième volet 4.

Le premier tronçon 22 comprend une fente de forme sensiblement complémentaire à au moins une partie du premier volet 2 adjacente à la zone charnière 6 et s'étendant dans le plan principal P. Selon un mode de réalisation, seule la partie adjacente à la zone charnière 6 s'étend dans la fente. Selon un autre mode de réalisation, la fente présente une dimension telle que le premier volet 2 dans son ensemble s'étend dans la fente. En tout état de cause, le premier tronçon 22 ne déforme pas la partie de la nappe 1 s'étendant dans ce tronçon.

Le deuxième tronçon 24 est formé par une empreinte 28 formée par une fente s'étendant dans une direction sensiblement perpendiculaire au plan principal. Une zone centrale de la nappe de maintien 1 est pliée pour être introduite dans l'empreinte et ainsi former la zone charnière 6. Le pliage est réalisé par un dispositif de pliage 30 s'étendant de l'autre côté de la bande 14 par rapport à l'empreinte 28. Un tel dispositif de pliage 30 comprend par exemple un élément mobile selon la direction perpendiculaire au plan principal et agencé pour appuyer sur la zone centrale de la nappe de maintien 1 afin de la faire entrer dans l'empreinte 28. Un tel élément peut être chauffé afin d'améliorer la déformabilité de la nappe de maintien 1 au cours du pliage. Selon un mode de réalisation, le dispositif de pliage 30 comprend un dispositif de soufflage d'air chaud sur la zone centrale de la nappe 1 permettant de chauffer la zone centrale de la nappe 1 afin d'en améliorer la déformabilité pour la faire pénétrer dans l'empreinte 28. Selon un mode de réalisation, un dispositif de soufflage d'air froid sur la zone centrale de la nappe 1 est également prévu pour refroidir la zone centrale une fois que celle-ci s'étend dans l'empreinte afin de fixer la forme de la zone charnière 6. Le dispositif de soufflage est par exemple intégré à l'élément mobile et est agencé pour souffler de l'air chaud lorsque l'élément mobile fait pénétrer la zone centrale dans l'empreinte 28 et souffler de l'air froid lorsque l'élément mobile est retiré de l'empreinte. En variante, les étapes de soufflage d'air chaud, d'introduction dans l'empreinte et de soufflage d'air froid sont séquentielles.

Selon un mode de réalisation, le deuxième tronçon 24 est formé par des parois des premier et troisième tronçons 22 et 26, ces parois formant les parois de l'empreinte 28. En chauffant ces premier et troisième tronçons 22 et 26, on chauffe également les parois de l'empreinte 28, ce qui améliore le thermoformage de la zone charnière 6. Selon un mode de réalisation, les premier et troisième tronçons 22 et 26 sont mobiles l'un par rapport à l'autre pour les écarter et les rapprocher l'un de l'autre, ce qui permet de faire varier la distance séparant les parois de l'empreinte 28. Ainsi, lorsque l'élément mobile fait pénétrer la zone centrale de la nappe 1 dans l'empreinte 28, les premier et troisième tronçons 22 et 26 sont rapprochés l'un de l'autre ce qui permet de maintenir la zone charnière 6 dans l'empreinte lors de son thermoformage. Les premier et troisième tronçons 22 et 26 peuvent ensuite être écartés l'un de l'autre pour faciliter l'extraction de la zone charnière 6 du dispositif de formage 20.

Le troisième tronçon 26 est formé par une fente de forme sensiblement complémentaire au deuxième volet 4 et s'étendant dans le plan secondaire P'. Par conséquent, dans le cas d'un deuxième volet 4 non coplanaire avec le premier volet 2, la fente du troisième tronçon 26 forme un angle α non nul avec la fente du premier tronçon 22. Ainsi, selon ce mode de réalisation, lorsqu'une partie de la nappe de maintien 1 entre dans le troisième tronçon, cette partie est pliée par rapport au premier volet 2 pour former le deuxième volet 4 s'étendant dans le plan secondaire P'. Le troisième tronçon 26 peut être chauffé, comme indiqué précédemment, afin d'améliorer la déformabilité de la nappe de maintien 1 pour assurer son pliage. En variante, lorsque le deuxième volet 4 s'étend dans le même plan que le premier volet 2, la fente du troisième tronçon 26 s'étend dans le même plan que la fente du premier tronçon 22.

Les premier, deuxième et troisième tronçons 22, 24 et 26 sont par exemple formés par des plaques en céramique avec un traitement de surface en tourmaline ou en titane. Des tels matériaux permettent de chauffer les fibres de la nappe de maintien sans en bruler ou dégrader les fibres. Ces matériaux assurent ainsi une stabilité thermique de la nappe de maintien 1.

Selon un mode de réalisation, le dispositif de formage 20 est formé de différents tronçons mobiles les uns par rapport aux autres afin de permettre d'ouvrir le dispositif de formage 20 et ainsi d'avoir accès à la nappe de maintien 1 formée.

La formation de la charnière est effectuée alors qu'au moins le premier panneau 2 s'étend dans le plan principal P.

Après la découpe et la mise en forme, la nappe de maintien 1 présente ses dimensions et sa forme finales pour permettre son moulage comme cela va à présent être décrit. Il est entendu que la forme de la nappe de maintien 1, notamment l'angle a, peut être légèrement différente et cours et/ou à l'issue des opérations de moulage.

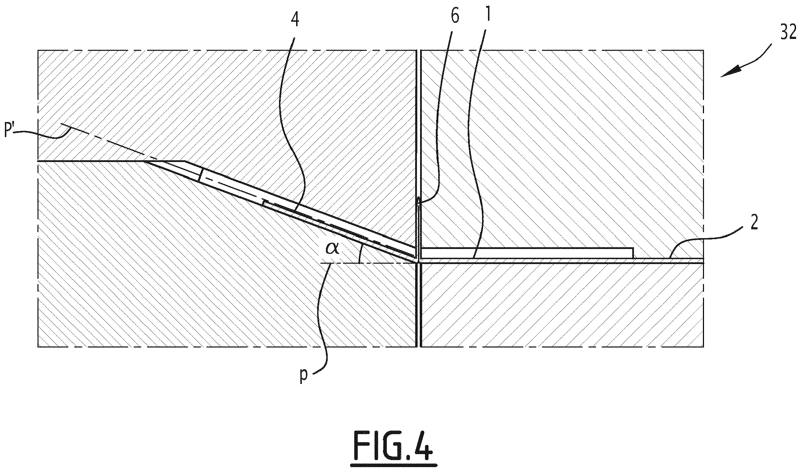

Une fois la nappe formée et découpée, celle-ci est prélevée de l'outil de réalisation 10 par un dispositif de manipulation robotisé (non représenté) et placée dans un outil de moulage 32 d'un dispositif de coussin gonflable, représenté sur la Fig. 4.

L'outil de moulage 32 comprend au moins une cavité de moulage présentant la forme du corps à surmouler sur l'un du premier ou du deuxième volets 2, 4 et/ou la forme du couvercle à surmouler sur l'autre du premier ou du deuxième volets 2, 4. Ainsi, l'outil de moulage 32 peut être agencé pour réaliser en même temps le corps et le couvercle sur les premier et deuxième volets 2, 4 ou pour réaliser ces deux éléments l'un après l'autre dans deux cavités de moulage successives. La réalisation du corps et du couvercle se fait par injection d'un matériau de moulage, par exemple un matériau plastique, dans la ou les cavités de moulage sur les premier et deuxième volets 2, 4. Selon différents modes de réalisation, la zone charnière 6 n'est pas surmoulée, comme représenté sur la Fig. 4, ou elle est surmoulée dans le couvercle ou dans le corps ou par un élément additionnel surmoulant uniquement la zone charnière 6.

Le couvercle est ainsi solidarisé au corps au moins par l'intermédiaire de la nappe de maintien 1, celle-ci autorisant un déplacement du couvercle par rapport au corps sous l'effet du déploiement d'un coussin gonflable, tout en empêchant le couvercle de se désolidariser du reste du dispositif de coussin gonflable ou de se rompre. Selon un mode de réalisation, le couvercle est solidarité au corps par l'intermédiaire de la nappe de maintien 1 et est en outre venu de matière avec le corps, par exemple en prévoyant des affaiblissements de matière entre le corps et le couvercle afin que celui-ci puisse s'écarter du canal de tir lors du déploiement du coussin gonflable.

Le procédé de réalisation de la nappe de maintien 1 décrit précédemment permet de « pré-former » la nappe de maintien 1 avant son surmoulage et ainsi améliorer son positionnement et son surmoulage dans l'outil de moulage. En outre, le temps de cycle pour réaliser une nappe de maintien à partir de la bande est court et se fait dans un unique outil de réalisation 10 et plusieurs nappes de maintien peuvent être réalisées successivement à partir de la bande 1.

## Revendications

1. Procédé de réalisation d'une nappe de maintien (1) d'un couvercle de dispositif de coussin gonflable au moyen d'un outil de réalisation (10) de la nappe de maintien, ladite nappe de maintien comprenant au moins un premier volet (2) destiné à être solidarisé à un corps ou au couvercle du dispositif de coussin gonflable, un deuxième volet (4) destiné à être solidarisé à l'autre du corps ou du couvercle du dispositif de coussin gonflable, et une zone charnière (6) s'étendant entre le premier volet (2) et le deuxième volet (4), le procédé comprenant les étapes suivantes :
- fourniture d'une partie d'une bande (14) de matériau de la nappe de maintien sensiblement plane et tendue à un dispositif de mise en forme (20) de l'outil de réalisation, ladite partie de bande s'étendant dans un plan principal (P),
- découpe de la partie de bande (14) s'étendant dans le dispositif de mise en forme (20) à la dimension de la nappe de maintien (1) à réaliser au moyen d'un dispositif de découpe (18) de l'outil de réalisation (10) pour obtenir une nappe de maintien sensiblement plane et tendue dans le dispositif de mise en forme (20),
- déformation au moyen du dispositif de mise en forme (20) d'une partie centrale de ladite nappe de sorte à former une zone charnière (6) comprenant au moins deux panneaux (8) s'étendant dans des plans différents du plan principal (P), la nappe formant un premier volet (2) d'un côté de la zone charnière (6) et un deuxième volet (4) de l'autre côté de la zone charnière (6), au moins ledit premier volet (2) et (4) s'étendant dans le plan principal (P).

2. Procédé de réalisation selon la revendication 1, dans lequel la nappe de maintien (1) est formée par un filet en aramide, en polyéthersulfone ou en polyester.

3. Procédé de réalisation selon la revendication 1 ou 2, comprenant en outre une étape de déformation du deuxième volet (4) dans laquelle le deuxième volet (4) est plié pour s'étendre dans un plan secondaire (P') formant un angle (α) non nul avec le plan principal (P).

4. Procédé de réalisation selon la revendication 3, dans lequel l'angle (a) formé entre le plan secondaire (P') et le plan principal (P) est sensiblement compris entre 10° et 60°.

5. Procédé de réalisation selon la revendication 3 ou 4, dans lequel l'étape de déformation du deuxième volet (4) est réalisée par pliage et introduction dudit deuxième volet (4) dans une fente inclinée selon le plan secondaire (P') par rapport au plan principal (P).

6. Procédé de réalisation selon l'une quelconque des revendications 1 à 5, dans lequel les panneaux (8) de la zone charnière (6) forment chacun un angle compris entre 30° et 150° avec le plan principal (P).

7. Procédé de réalisation selon l'une quelconque des revendications 1 à 6, dans lequel la partie de bande (14) est fournie à partir d'un rouleau (12) de bande (14) de matériau de la nappe de maintien, le procédé comprenant une étape de déroulement de la bande (14) à partir du rouleau (12) et d'acheminement de la bande (14) au dispositif de mise en forme (20), la partie de la bande (14) étant maintenue plane et tendue par un dispositif de maintien (16) s'étendant en amont du dispositif de mise en forme (20) par rapport à la direction de circulation de la bande (14) au cours de son acheminement au dispositif de mise en forme (20).

8. Procédé de réalisation selon l'une quelconque des revendications 1 à 7, comprenant en outre une étape de prélèvement de la nappe de maintien (1) formée du dispositif de mise en forme (20) et de placement de ladite nappe de maintien (1) dans un outil de moulage (32), ledit prélèvement et ledit placement étant effectué par un dispositif de manipulation robotisé.

9. Procédé de réalisation selon l'une quelconque des revendications 1 à 8, dans lequel l'étape de déformation de la partie centrale est réalisée par pliage et introduction de la partie centrale dans une empreinte (6) comprenant une fente s'étendant selon une direction formant un angle non nul avec le plan principal (P).

10. Procédé de réalisation selon l'une quelconque des revendications 1 à 9, dans lequel au moins la partie centrale de la nappe est chauffée au cours l'étape de déformation de la partie centrale.

11. Procédé de réalisation d'un dispositif de coussin gonflable comprenant un corps, un couvercle et une nappe de maintien (1) solidarisant le couvercle au corps, le procédé comprenant les étapes suivantes :
- réalisation d'une nappe de maintien (1) selon le procédé de réalisation selon l'une quelconque des revendications 1 à 10,
- positionnement de la nappe de maintien (1) dans une cavité de moulage, présentant la forme du corps et/ou du couvercle,
- injection d'un matériau de moulage dans la cavité de moulage de sorte à surmouler le corps sur l'un des volets (2, 4) de la nappe de maintien (1) et/ou à surmouler le couvercle sur l'autre volet (2, 4) de la nappe de maintien, la zone charnière (6) s'étendant entre le corps et le couvercle.
